# EUROPÄISCHE PATENTSCHRIFT

(11) **EP 3 369 569 B1**
(45) Veröffentlichungstag und Bekanntmachung des Hinweises auf die Patenterteilung: **22.03.2023**
(21) Anmeldenummer: 18152004.0
(22) Anmeldetag: 17.01.2018
(51) Int. Cl.: B32B 37/06, B32B 41/00, B30B 15/06

(54) **VERFAHREN ZUM LAMINIEREN VON MEHREREN IN EINEM STAPEL ANGEORDNETEN SCHICHTEN ZU EINEM LAMINATVERBUND**
METHOD FOR LAMINATING A NUMBER OF LAYERS ARRANGED IN A STACK TO FORM A LAMINATE COMPOSITION
PROCÉDÉ DE LAMINAGE D'UNE PLURALITÉ DE COUCHES SOUS LA FORME D'UN EMPILEMENT DESTINÉES À OBTENIR UN COMPOSITE STRATIFIÉ

(30) Priorität: 14.02.2017 DE 102017102940
(43) Veröffentlichungstag der Anmeldung: 05.09.2018
(60) Teilanmeldung: 23155537.6
(73) Patentinhaber: Bundesdruckerei GmbH, 10969 Berlin (DE)
(72) Erfinder: Kulikovsky, Lazar, 14165 Berlin (DE); Dressel, Olaf, 14641 Wustermark (DE); Wilke, Andreas, 13509 Berlin (DE); Kulikovska, Olga, 14165 Berlin (DE)
(74) Vertreter: Mammel und Maser Patentanwälte PartG mbB

(56) Entgegenhaltungen:
- EP-A2- 1 340 611
- US-A- 4 365 547
- US-A- 5 728 309
- US-A- 6 109 903

## Beschreibung

Die Erfindung betrifft ein Verfahren zum Laminieren von mehreren in einem Stapel angeordneten Schichten zu einem Laminatverbund.

Aus der US 5,728,309 A ist ein Verfahren zur Herstellung eines organischen Matrixverbundes bekannt. Ein Oberwerkzeug und ein Unterwerkzeug umfasst jeweils einen Werkzeugeinsatz, der eine gemeinsame Kavität bilden. In diese Kavität wird eine Retorte eingelegt. Darauffolgend wird diese Retorte mittels Induktionsspulen aufgeheizt und daraufFolgend einseitig mit Druck beaufschlagt, damit diese Retorte eine Kontur des Werkzeugeinsatzes annimmt.

Aus der US 6,109,903 A ist eine Vorrichtung zur Herstellung eines Gummi-Metallplattenverbundes bekannt. Zwischen einer oberen und unteren Platte wird der herzustellende Gummi-Metallplattenverbund gehalten. Des Weiteren wird der herzustellende Gummi-Metallplattenverbund seitlich durch eine Induktionsspule umgeben. Aufgrund der durch die Induktionsspule erzeugten Wirbelströme werden die Metallplatten aufgeheizt und mit den dazwischen angeordneten Gummischichten verbunden.

Aus der US 4,365,547 A ist eine Mehrplattenpresse bekannt. Ein Presszyklus beginnt mit dem Schließen der Presse, indem die Pressplatten zusammengeführt werden. Gleichzeitig wird Dampf in die Pressplatten eingeführt, um das darin enthaltene Wasser auszutreiben. Anschließend wird der Dampfdruck in der Pressplatte überwacht, um die gewünschte Temperatur in den Pressplatten aufrechtzuerhalten.

Aus der EP 1 340 611 A2 ist eine Plattenpresse mit einem Heiz- und Kühlsystem zur Herstellung beschichteter plattenförmiger Produkte bekannt. In die Pressplatten sind Kanäle für eine Heiz- und eine Kühlflüssigkeit vorgesehen. Diese Kanäle können wahlweise sowohl an einen Heizkreislauf als auch an einen Kühlkreislauf über Mischventile anschließbar sein. Diese getrennten Kanäle für die Heiz- und die Kühlflüssigkeit in der jeweiligen Pressplatte ermöglichen eine genaue Temperaturführung an der produktfernen Seite der Pressplatte, so dass im Störbetrieb einer auftretenden unerwünschten Aufheizung aktiv entgegen gewirkt werden kann.

Aus der DE 10 2010 031 421 A1 ist eine Laminiervorrichtung zum Laminieren eines mehrlagigen Dokumentes bekannt, welche zwei Laminierplatten umfasst, zwischen denen ein zu laminierendes Dokument anordenbar ist. Die Laminierplatten bestehen aus mindestens einem elektrisch leitfähigen keramischen Material, welche elektrische Anschlüsse aufweisen, so dass die Laminierplatten und das Dokument durch Anlegen einer elektrischen Spannung an die elektrischen Anschlüsse während einer Aufheizphase eines Laminierprozesses erwärmbar sind. Nach einer vorbestimmten Laminierzeit des Laminierprozesses wird die Aufheizphase und somit das Heizen der Laminierzeit beendet. Darauffolgend erfolgt eine Abkühlphase, in welcher die Laminierplatten durch ein Kühlmittel gekühlt werden.

Zum Laminieren des Dokuments wird dieses zwischen die Laminierplatten gelegt, die Laminierplatten zusammengepresst und durch Anlegen einer Spannung an die elektrischen Anschlüsse werden die Laminierplatten erhitzt. Nach dem Laminieren bzw. Anschmelzen und Verbinden der einzelnen Schichten des Dokumentes wird die Aufheizung abgeschalten und die Kühlflüssigkeit den Laminierplatten zugeführt.

Ein solches Verfahren, bei welchem das Laminieren die Laminierplatten mit einer konstanten Temperatur beheizt werden, weist den Nachteil auf, dass die Zykluszeiten erhöht sind. Zudem kann dies zu einem teilweisen Überhitzen einzelner Schichten führen.

Der Erfindung liegt die Aufgabe zugrunde, ein Verfahren zum Laminieren von mehreren in einem Stapel angeordneten Schichten zu einem Laminatverbund vorzuschlagen, wodurch eine Verringerung der Zykluszeiten für den Laminierprozess und eine Verbesserung der Lamination erzielt wird.

Diese Aufgabe wird durch ein Verfahren zum Laminieren von mehreren in einem Stapel angeordneten Schichten zu einem Laminatverbund mit einer Laminiervorrichtung gelöst, bei der ein Laminierwerkzeug mit einer oberen und/oder unteren Laminierplatte und einem Oberwerkzeug und Unterwerkzeug in einer Aufheizphase vor dem Zusammenführen der oberen und unteren Laminierplatten auf dem Stapel mit einer gegenüber der Laminiertemperatur der Schichten des Stapels erhöhten Aufheiztemperatur aufgeheizt wird. Dies ermöglicht, dass die Aufheizdauer der Schichten bzw. des Laminiergutes verkürzt wird, da zu Beginn der Aufheizphase die Laminierplatten mit einer hohen Temperatur angesteuert werden, wodurch ein hoher Temperaturgradient verursacht wird. Dies führt zu einem schnellen Wärmefluss. Die Wärme wird innerhalb kurzer Zeit an die Schichten abgeben und kann in diese eingeleitet werden und dennoch weisen die Laminierplatten eine Temperatur auf, welche für die Laminierung erforderlich ist. Dadurch wird die Laminierdauer zum Verbinden der Schichten zu einem Stapel reduziert, da nicht erst nach dem Zusammenpressen der Schichten zu einem Stapel durch die Laminierplatten eine Aufheizung der Laminierplatten vorgenommen wird, insbesondere mit einer Aufheiztemperatur angesteuert werden die gegenüber der Glasübergangstemperatur der Schichten des Stapels erhöht ist.

Des Weiteren ist bevorzugt vorgesehen, dass in der Aufheizphase des Laminierprozesses nach dem Zusammenführen der Laminierplatten für den Pressvorgang die Aufheiztemperatur der Laminierplatten reduziert wird, so dass die Laminiertemperatur in dem Stapel gleichbleibend gehalten wird. Diese Reduzierung der Laminierplattentemperatur ermöglicht die Vermeidung eines zu starken Überhitzung bzw. Anschmelzens oder Aufschmelzens der einzelnen Schichten innerhalb des Stapels. Zudem können dadurch kontrollierte und gleichbleibende Bedingungen während des Laminierprozesses gegeben sein. Die Reduzierung der Laminierplattentemperatur beziehungsweise der Aufheiztemperatur kann dabei geregelt sein und vorzugsweise durch eine vorbestimmte Steuerung schrittweise als auch kontinuierlich erfolgen.

Eine weitere bevorzugte Ausgestaltung des Verfahrens sieht vor, dass in der Aufheizphase nach dem Zusammenführen der Laminierplatten für den Pressvorgang eine exponentielle Reduzierung der Aufheiztemperatur der Laminierplatten angesteuert wird. Dadurch kann durch angepassten Wärmefluss ein besonders optimierter Laminierprozess durchgeführt werden.

Des Weiteren ist bevorzugt vorgesehen, dass die Reduzierung der Aufheiztemperatur zum Aufheizen der Laminierplatten am Ende der Aufheizphase des Laminierprozesses auf eine Temperatur angesteuert wird, die mindestens gleich oder geringfügig größer als eine höchste Glasübergangstemperatur der im Stapel zu laminierenden Schicht ist. Dadurch wird gerade eine so große Wärmeenergie in die Laminierverbund eingebracht, wie erforderlich ist, um die einzelnen Schichten des Stapels zu laminieren.

Zur Überwachung des Aufheizvorganges bzw. der Laminiertemperatur der Laminierplatten wird bevorzugt zumindest während des Pressvorganges, vorzugsweise während der gesamten Aufheizphase des Laminierprozesses, die Temperatur der Laminierplatten mit zumindest einem Temperatursensor überwacht und geregelt. Dadurch kann auch bei einem zu starken Temperaturabfall ein nochmaliges kurzzeitiges Aufheizen nachgesteuert werden.

Die Aufheiztemperatur der Laminierplatten wird bevorzugt an das Material und/oder die Plattenstärke der Laminierplatten angepasst. Dadurch kann zu Beginn der Aufheizphase, insbesondere vor dem Pressvorgang, eine gezielte Ansteuerung ermöglicht sein, um eine kurze Laminierzeit sowie eine geringe thermische Belastung des Stapels, als auch einen optimierten Energieverbrauch einzustellen.

Die Laminierplatten werden bevorzugt mit einem Fluid aufgeheizt. Dies weist den Vorteil auf, dass eine quasi trägerfreie Wärmequelle bereitgestellt wird, welche innerhalb einer kurzen Zeit den Wärmefluss während des Laminationsprozesses ansteuern kann. Alternativ kann die Aufheizung der Laminierplatten und Temperierung der Laminierplatten mittels einer Induktion, beispielsweise durch Spulen oder mittels in den Laminierplatten vorgesehenen Widerstandsheizelementen oder an den Laminierplatten vorgesehenen Widerstandsheizelementen erfolgen.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Ansicht auf eine erste Ausführungsform eines Laminierwerkzeuges,
Figur 2 eine schematische Schnittansicht entlang der Linie I-I in Figur 1,
Figur 3 eine schematische Ansicht einer Laminiervorrichtung mit einem Laminierwerkzeug gemäß den Figuren 1 und 2,
Figur 4 eine schematische Seitenansicht einer alternativen Ausgestaltung einer Laminiervorrichtung in einer geöffneten Position,
Figur 5 eine schematische Ansicht der Laminiervorrichtung gemäß Figur 4 in einer geschlossenen Anordnung,
Figur 6 eine schematische Seitenansicht eines oberen Presswerkzeuges mit einer Laminierplatte und an einem zugehörigen geschlossenen Fluidkreislauf,
Figur 7 ein Diagramm für eine Temperaturentwicklung im Stapel der Schichten gemäß einem Verfahren zur Herstellung eines Laminatverbundes nach dem Stand der Technik und
Figur 8 ein schematisches Diagramm einer Temperaturentwicklung im Stapel des Laminatverbundes gemäß der Erfindung.

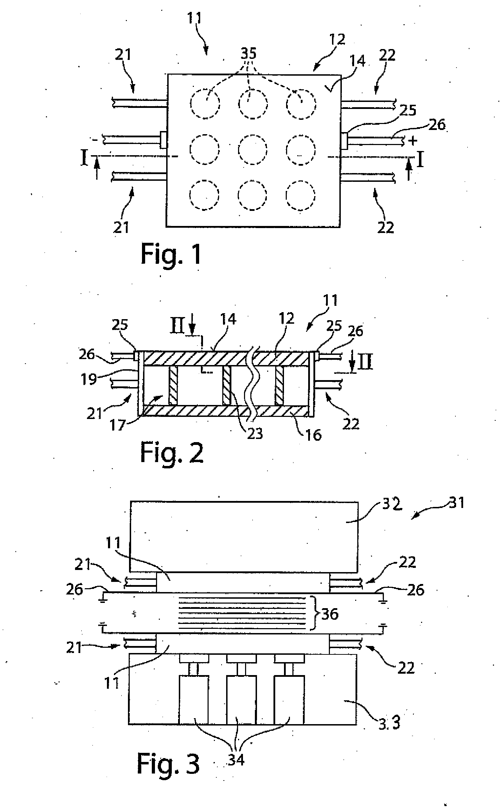

In Figur 1 ist eine schematische Ansicht auf eine erste Ausführungsform eines Laminierwerkzeuges 11 dargestellt. Eine schematische Schnittansicht entlang der Linie I-I geht aus Figur 2 hervor.

Das Laminierwerkzeug 11 umfasst eine Laminierplatte 12, welche eine beispielhaft quadratische oder rechteckförmige Kontur aufweist, entlang der sich eine Auflagefläche 14 erstreckt. Der Laminierplatte 12 gegenüberliegend ist eine Trägerplatte 16 vorgesehen, welche vorzugsweise parallel zur Laminierplatte 12 ausgerichtet ist. Dazwischenliegend ist eine Tragstruktur 17 vorgesehen, welche die Laminierplatte 12 zur Trägerplatte 16 beabstandet. Diese Tragstruktur 17 ist beispielsweise rippenförmig, stegförmig oder dergleichen ausgebildet. Diese Tragstruktur 17 ist von einer Außenwand 19 umgeben, welche an die Laminierplatte 12 und die Trägerplatte 16 anschließt. Dadurch wird ein geschlossenes Innenvolumen gebildet, innerhalb welchem die Tragstruktur 17 ausgebildet ist. An der Außenwand 19 sind ein Anschluss für zumindest einen Zulauf 21 und ein Anschluss für zumindest einen Ablauf 22 vorgesehen. Bei diesem Ausführungsbeispiel ist vorgesehen, dass beispielsweise auf einer Seite der Außenwand 19 zwei Zuläufe 21 und gegenüberliegend zwei Abläufe 22 vorgesehen sind.

Die Tragstruktur 17 ist derart ausgebildet, dass ein Medium, welches durch den Zulauf 21 in das Innenvolumen des Laminierwerkzeuges 11 gelangt über den Ablauf 22 abfließen kann. Beispielsweise können Mikrokanäle vorgesehen sein, die längs der flächigen Erstreckung des Laminierwerkzeuges 11 verlaufen. Alternativ können auch Stege 23 vorgesehen sein, die zueinander beabstandet sind und/oder Durchbrechungen oder Ausnehmungen aufweisen, um ein Durchströmen eines Mediums zu ermöglichen.

Die Laminierplatte 12 ist bevorzugt dicker als die Trägerplatte 16 ausgebildet. Die Außenwand 19 ist bevorzugt als elastische Membrane vorgesehen, so dass die Laminierplatte 12 gegenüber der Trägerplatte 16 geringfügig federnd nachgiebig ausgebildet sein kann. Bevorzugt ist das Laminierwerkzeug 11 aus einem Material hergestellt und kann beispielsweise durch ein 3D-Druckverfahren, wie beispielsweise Lasersintern oder Laserschmelzen, aufgebaut sein. Alternativ kann auch vorgesehen sein, dass das Laminierwerkzeug 11 mehrteilig ausgebildet ist, wobei die einzelnen Komponenten für Wärmebehandlung oder durch Verklebung miteinander verbunden sind, jedenfalls dahingehend, dass ein geschlossenes, insbesondere mediendichtes, Innenvolumen ausgebildet ist.

In diesem Ausführungsbeispiel ist vorgesehen, dass an der Laminierplatte 12 Anschlusskontakte 25 für elektrische Leitungen vorgesehen sind, die zu einer nicht näher dargestellten Steuerung führen. Dadurch kann die Laminierplatte 12 als Widerstandsheizelement angesteuert werden, um eine gezielte und definierte Erwärmung zu ermöglichen. Zusätzlich oder alternativ kann die Laminierplatte 12 mit einem Fluid, welches das Innenvolumen durchströmt, aufgeheizt werden.

Zum Kühlen des Laminierwerkzeuges 11 ist vorgesehen, dass ein gekühltes Medium über den Zulauf 21 zugeführt wird, das Innenvolumen durchströmt und über den Ablauf 22 abgeführt wird.

Durch die Durchströmung des Kühlmediums während Aufheizphase kann eine schnelle Steuerung, bzw. Reduzierung der Aufheiztemperatur erreicht werden.

Auf der Auflagefläche 14 des Laminierwerkzeuges 11 kann eine Prägestruktur eingebracht sein. Beispielsweise ist eine punkt- oder linienförmige Struktur eingraviert.

In Figur 3 ist eine schematische Seitenansicht einer Laminiervorrichtung 31 dargestellt, welche ein Unterwerkzeug 32 sowie ein Oberwerkzeug 33 aufweist. An dem Ober- und Unterwerkzeug 32, 33 ist jeweils ein Laminierwerkzeug 11 gemäß den Figuren 1 und 2 befestigt. Im Unterwerkzeug 32 sind beispielsweise mehrere Druckstempel 34 vorgesehen. Diese können gleichmäßig zur Auflagefläche 14 der Prägeplatte 12 verteilt angeordnet sein. Dies ist beispielsweise strichliniert in der Draufsicht in Figur 3 dargestellt. Durch diese Druckstempel 34 kann eine zusätzliche Kraft auf das Laminierwerkzeug 11 aufgebracht werden.

Zum Laminieren eines Stapels 36 aus mehreren Schichten 35 zu einem Laminatverbund 38, bei welchem die Schichten 35 unlösbar miteinander verbunden werden, wird der Stapel 36 auf ein unteres Laminierwerkzeug 11 aufgelegt. Darauffolgend wird die Laminiervorrichtung 31 geschlossen und insbesondere das Oberwerkzeug 33 auf das Unterwerkzeug 32 zubewegt, um einen Laminierdruck auf den Stapel 36 auszuüben. Bereits vor dem Schließen der Laminiervorrichtung 31 beginnt die Aufheizphase eines Laminierzyklus und das Laminierwerkzeug 11 wird beheizt, bis die einzelnen Schichten 35 des Stapels 36 zu einem Laminatverbund 38 miteinander verbunden sind. Darauffolgend wird die Aufheizphase beendet und die Abkühlphase eingeleitet. Ein Medium zum Kühlen der Laminierwerkzeuge 11 wird durch die Tragstruktur 17 hindurchgeführt. Der Laminierdruck innerhalb der Laminiervorrichtung 31 wird so lange aufrechterhalten, bis der Laminatverbund 38 abgekühlt ist. Anschließend wird die Laminiervorrichtung 31 geöffnet und das fertige Laminat kann von dem Unterwerkzeug 32 abgenommen werden. Darauffolgend ist die Laminiervorrichtung 31 wiederum für den nächsten Laminiervorgang bereit.

Alternativ zu der in Figur 3 dargestellten Ausführungsform der Laminiervorrichtung 31 kann vorgesehen sein, dass beispielsweise zwischen den Druckstempeln 34 an einer Unterseite des Laminierwerkzeuges 11, insbesondere an der Trägerplatte 16, Heizelemente 38, insbesondere elektrische Heizelemente, vorgesehen sind. Durch diese Heizelemente 38 kann ebenfalls eine Erwärmung des Laminierwerkzeuges 11 durchgeführt werden.

Der Stapel 36, der aus mehreren Schichten 35 besteht, kann beispielsweise zumindest jeweils eine äußere Schicht aus einem thermoplastischen Elastomer, welche durch Einbringen einer Temperatur aufschmelzbar ist, umfassen, so dass beispielsweise diese äußeren Schichten unter Einschluss von inneren Schichten, die beispielsweise aus Papier bestehen können, eine geschlossene Umhüllung bilden. Alternativ können die einzelnen Schichten auch alle aus einem thermoplastischen Elastomer bestehen, so dass diese zumindest an der Oberfläche anschmelzen oder aufschmelzen und sich mit der benachbarten Schicht zu einem Laminatschichtverbund, wie beispielsweise einer Karte, insbesondere einer PC-Karte, verbinden. Ein solcher Laminatverbund 38 kann eine Zutrittskarte, Identifikationskarte, Scheckkarte oder personalisierte Karte, wie beispielsweise ein Personalausweis oder dergleichen, sein.

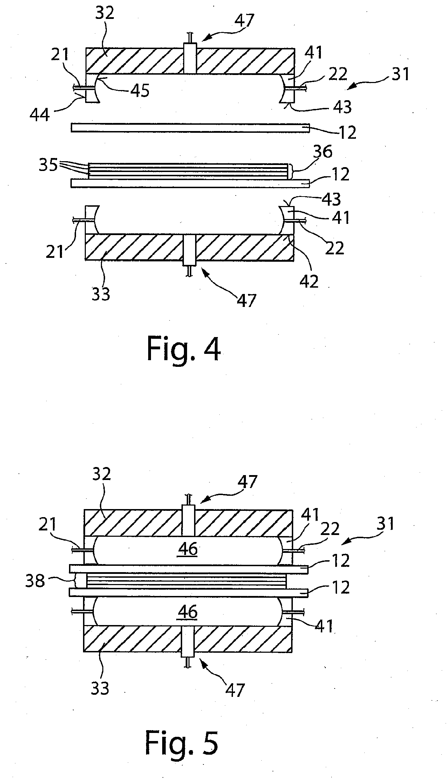

In Figur 4 ist schematisch eine alternative Ausführungsform der Laminiervorrichtung 31 dargestellt. Diese Laminiervorrichtung 31 befindet sich in einem geöffneten Zustand.

In Figur 5 ist die Laminiervorrichtung 31 in einem geschlossenen Zustand angeordnet. Die Laminiervorrichtung 31 umfasst ein Oberwerkzeug 32 und ein Unterwerkzeug 33 mit jeweils einer Laminierplatte 12 sowie einem dazwischen angeordneten Dichtungselement 41. Zwischen der oberen und unteren Laminierplatte 12 sind in einem Stapel 36 mehrere übereinanderliegende Schichten 35 auf der unteren Laminierplatte 12 aufliegend vorgesehen, die durch einen nachfolgend noch näher beschriebenen Laminiervorgang zu einem Laminatverbund 38 gemäß Figur 5 verbunden werden. Das Ober- und Unterwerkzeug 32, 33 sind beispielsweise als eine Pressplatte ausgebildet. Die Laminierplatten 12 sind beispielsweise als dünne metallische Platten ausgebildet.

Das Dichtelement 41 umfasst einen geschlossenen umlaufenden Körper, der an die flächige Erstreckung des Ober- und Unterwerkzeuges 32, 33 angepasst ist. Beispielsweise kann das Dichtelement 41 als auch das Ober- und Unterwerkzeug 32, 33 eine rechteckförmige Kontur aufweisen.

Das Dichtelement 41 weist eine obere Anlagefläche 42 zur Anlage an dem Oberwerkzeug 32 und Unterwerkzeug 33 auf. Gegenüber der oberen Anlagefläche 42 ist eine untere Anlagefläche 43 zum Anlegen an der Laminierplatte 12 vorgesehen. Das Dichtelement 41 weist bevorzugt eine innere Umfangsfläche 45 auf, die sichelförmig oder bogenförmig ausgebildet ist. Dadurch ist eine innere Stirnfläche konkav am Dichtelement 41 ausgebildet. An einer äußeren Umfangsfläche 44 können zumindest ein Zulauf 21 und zumindest ein Ablauf 22 für ein Fluid vorgesehen sein.

Zur Durchführung eines Laminiervorganges wird das Oberwerkzeug 32 vom Unterwerkzeug 33 geschlossen, so dass diese über die Laminierplatten 12 einen Druck auf die Schichten 35 des Stapels 36 zur Bildung des Laminatverbundes 37 ausüben. Während der Lamination wird durch das Oberwerkzeug 32 bzw. Unterwerkzeug 33 gegenüber der jeweiligen Laminierplatte 12 ein Druck auf das Dichtungselement 41 ausgeübt, so dass darin eine Druckkammer 46 ausgebildet ist.

Alternativ zu dem Zu- und Ablauf 21, 22 kann der Zu- und Ablauf auch in dem plattenförmigen Material des Ober- und Unterwerkzeuges 32, 33 erfolgen, so dass die Dichtung 46 ausschließlich aus Dichtungsmaterial besteht.

Zur Überwachung der Temperatur des die Druckkammer 46 durchströmenden Fluides ist bevorzugt ein Temperatursensor 47 vorgesehen, der ebenfalls mit einer nicht näher dargestellten Steuerung verbunden ist.

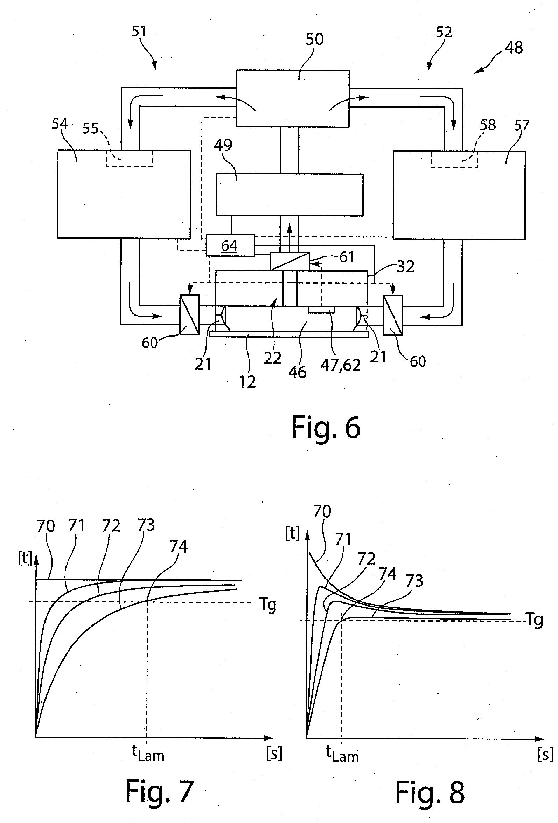

In Figur 6 ist ein Oberwerkzeug 32 mit einem daran angeschlossenen Fluidkreislauf 45 dargestellt. Analoges gilt für das Unterwerkzeug 14. Dieser Fluidkreislauf 48 umfasst einem dem Oberwerkzeug 32 zugeordneten Ablauf 22, der mit einem Niederdruckspeicher 49 zur Aufnahme des aus der Druckkammer 46 abgeführten Fluides verbunden ist. Dem Niederdruckspeicher 49 nachgeschalten ist ein Kompressor 50 vorgesehen. Von diesem aus wird ein Zuführzweig 51 für heißes Fluid und ein Zuführzweig 52 für kühles Fluid mit dem in den Niederdruckspeicher 49 gespeicherten Fluids versorgt. In dem Zuführzweig 51 ist ein Speicher 54 für heißes Fluid vorgesehen. Dieser umfasst bevorzugt ein Heizelement 55. Über eine Zuführleitung wird heißes Fluid von dem Speicher 54 dem zumindest einen Zulauf 21 am Dichtelement 41 in die Druckkammer 46 zugeführt.

Der Zuführzweig 52 für kaltes Fluid umfasst einen Speicher 57 für kaltes Fluid sowie bevorzugt ein dem Speicher 57 zugeordnetes Kühlelement 58. Von diesem Speicher 57 aus führt eine Zuführleitung zum zumindest einen Zulauf 21 am Dichtelement 41, um das kühle Fluid der Druck-kammer zuzuführen.

Dem Zulauf 21 vorgeschalten ist jeweils ein Ventil 60, insbesondere Einlassventil. Ebenso wird der Ablauf 22 über ein Ventil 61, insbesondere Auslassventil gesteuert. Ergänzend kann in dem Oberwerkzeug 32 ein Temperatur- und/oder Drucksensor 47, 62 vorgesehen sein. Des Weiteren ist eine Steuerungseinrichtung 64 vorgesehen, welche die Ventile 60, 61 steuert sowie Daten des Temperatur- und/oder Drucksensors 47, 62 erfasst und auswertet. Zusätzlich kann die Steuerungseinrichtung 64 mit dem Niederdruckspeicher 49, dem Kompressor 50, dem Heizelement 55, dem Kühlelement 58, dem Speicher 54 bezüglich Druck und/oder Temperatur an dem Speicher 57 bezüglich Druck und/oder Temperatur gekoppelt sein. Der vorbeschriebene Aufbau gilt analog für das Unterwerkzeug 33.

Zum Schließen der Laminiervorrichtung 11 wird das Oberwerkzeug 32 und das Unterwerkzeug 33 in eine Schließposition gemäß Figur 3 und 5 übergeführt. Durch die aufgebrachte Presskraft der Ober- und Unterwerkzeuge 32, 33 wird das jeweilige Dichtelement 41 zwischen der Laminierplatte 12 und dem Ober- und Unterwerkzeug 32, 33 eingepresst und bildet eine dadurch gebildete Druckkammer 46 ab. Anschließend wird durch die Steuerungseinrichtung 64 ein Öffnen des Ventils 60 am Zulauf 21 für heißes Fluid angesteuert, so dass aus dem Speicher 54 ein heißes Fluid in die Druckkammer 46 geführt wird. Nach Erreichen eines vorbestimmten Druckes in der Druckkammer 46, welches über den Druck- und/oder Temperaturfühler 47, 62 erfasst wird, wird das Ventil 60 geschlossen. Ergänzend kann über die Heizelemente 55 die Temperatur in der Druckkammer 41 noch weitere aufgeheizt werden. Sobald die Lamination, insbesondere das Verschweißen der Schichten 35 erfolgt ist, wird das Ventil 61 geöffnet, so dass das heiße Fluid aus der Druckkammer 46 über den Ablauf 22 abströmen und in den Niederdruckspeicher 49 gelangen kann. Gleichzeitig wird das Ventil 60 am Zulauf 21 für das kühle Fluid geöffnet, so dass aus dem Speicher 57 kühles Fluid nachfließen kann. Sobald durch den Temperatursensor 47 in der Druckkammer kühles Fluid erfasst wird, schließt das Ventil 61. Über den Speicher 57 wird weiterhin kühles Fluid zugeführt, bis der erforderliche Druck mit kühlem Fluid in der Druckkammer 46 aufgebaut ist. Dies wird wiederum durch den Temperatur- und/oder Drucksensor 47, 62 erfasst. Daraufhin wird das Ventil 60 für das kühle Fluid geschlossen. Nach dem Abkühlen des Laminatverbundes 38 kann das Ventil 61 vom Ablauf 22 wieder geöffnet werden. Ebenso kann zumindest ein Ventil 60 für die Nachführung des kühlen oder heißen Fluids erfolgen, um nach dem Abheben des Oberwerkzeuges 32 vom Unterwerkzeug 33 jeweils die Laminierplatte 12 von dem Ober- und Unterwerkzeug 32, 33 abzuheben. Das gespeicherte Fluid im Niederdruckspeicher 49 kann mittels dem Kompressor 50 komprimiert und wahlweise dem Zuführzweig 51, 52 zugeführt werden. Bevorzugt wird in dem Niederdruckspeicher 49 vorhandenes wärme Fluid dem Zuführzweig 51 und kühles Fluid dem Zuführzweig 52 zugeführt. Durch die Anordnung der Speicher 54, 57 in dem Fluidkreislauf 48 kann ein schnelles Befüllen der Druckkammer 46 erfolgen, insbesondere ein Aufheizen des Stapels 36 und darauffolgend ein schnelles Abkühlen des Laminatverbundes 38 ermöglicht sein.

In Figur 7 ist ein Diagramm für eine Aufheizphase eines Laminierprozesses zur Herstellung eines Laminatverbundes 38 bei einem aus dem Stand der Technik bekannten Verfahren dargestellt. Über die X-Achse ist die Zeit und über die Y-Achse die Temperatur aufgetragen. Die Tg-Linie zeigt die Glasübergangstemperatur der zu laminierenden Schichten 35 im Stapel 36 zu einem Laminatverbund 38. Dabei ist die dargestellte Glasübergangstemperatur an diejenige Schicht 35 angepasst, welche die höchste Temperatur zum Aufschmelzen oder Anschmelzen umfasst.

Nach dem Zusammenführen der Laminierwerkzeuge 11 zum Stapel 36 werden diese mit einer konstanten Temperatur beheizt. Im Falle einer ersten Ausführungsform der Figuren 1 bis 3 und bei der Ausführungsform gemäß Figur 4 und 5 werden die jeweiligen Druckkammern mit einem heißen Fluid durchströmt. Im Falle einer alternativen Ausführungsform der Figuren 1 bis 3 werden die den Laminierplatten 12 zugeordneten Widerstandsheizelemente bestromt und auf eine konstante Temperatur erhitzt. Die Aufheizphase wird solange mit einer konstanten Temperatur betrieben, bis die einzelnen Schichten 35 an- oder aufgeschmolzen und miteinander laminiert sind. Dabei ergibt sich für die Laminierplatte 12 ein Temperaturverlauf gemäß der Kennlinie 71. Für eine Schicht 35 im Stapel 36, beispielsweise aus Polycarbonat mit einer Materialstärke von 0,1 mm, ergibt sich ein Temperaturverlauf gemäß der Kennlinie 72. Für eine weitere Schicht 35 im Stapel 36, beispielsweise aus Polycarbonat mit einer Schichtstärke von 0,4 mm, ergibt sich die Kennlinie 73. Ein Laminierzeitpunkt 74, zu welchem die Schichten 35 an- oder aufgeschmolzen sind und sich miteinander verbinden ergibt sich dann nachdem die Glasübergangstemperatur der Schicht 73 erreicht wurde.

In Figur 8 ist ein analoges Diagramm zu Figur 7 dargestellt. Aufgrund des erfindungsgemäßen Verfahrens wird eine erhebliche Verkürzung des Laminierzeitpunktes 74 erzielt, wie eine Gegenüberstellung der Diagramme zeigt.

Innerhalb der Aufheizphase des Laminierprozesses werden die Laminierplatten 12 mit einer Aufheiztemperatur aufgeheizt, die durch die Kennlinie 70 dargestellt ist. Die angesteuerte Aufheiztemperatur liegt zu Beginn der Aufheizphase weit oberhalb der Glasübergangstemperatur der zu laminierenden Schicht 35 im Stapel 36. Durch eine derart überhöhte Ansteuerung der Aufheiztemperatur der Laminierplatten 12 wird ein verkürztes Aufheizen der Laminierplatten 12 ermöglicht. Dadurch wird ein erster steiler Anstieg der Temperatur in den Laminierplatten gemäß der Kennlinie 71 ermöglicht. Dies wiederum bewirkt, dass die in den Laminierplatten 12 vorhandene Temperatur auf die Schichten 35 im Stapel 36 übertragen werden. Dadurch werden ebenfalls steile Anstiege für die Schicht gemäß Kennlinie 73 und 74 ermöglicht. Im weiteren Verlauf der Aufheizphase wird die laminierplattenangesteuerte Aufheiztemperatur gemäß der Kennlinie 70 reduziert. Dabei wird eine Reduzierung dahingehend vorgenommen, dass die Temperatur der Laminierplatten 12 oberhalb der Linie Tg verbleibt. Aus dem Diagramm gemäß Figur 8 ist zu erkennen, dass die Kennlinie 73 zu einem wesentlich früheren Laminierzeitpunkt 74 die Linie Tg kreuzt als dies bei dem Verfahren gemäß Figur 7 der Fall ist. Dadurch wird zu einem früheren Zeitpunkt ein An- oder Aufschmelzen der verbindenden Schichten 35 erzielt, wodurch eine Verkürzung des Arbeitszyklus einhergeht.

Die Reduzierung der angesteuerten Aufheiztemperatur für die Laminierplatten 12 wird bevorzugt exponentiell angesteuert. Alternativ kann auch eine Sprungfunktion oder ein schrittweises Reduzieren ermöglicht sein.

### Bezugszeichenliste

**Tabelle 1**

| | | |
|---|---|---|
| 11. Laminierwerkzeug | 41. Dichtelement | 62. Temperatur- und/oder Drucksensor |
| 12. Laminierplatte | 42. Anlagefläche | 64. Steuerungseinrichtung |
| 14. Auflagefläche | 43. Anlagefläche | 70. Kennlinie |
| 16. Trägerplatte | 44. Umfangsfläche außen | |
| 17. Tragstruktur | 45. Umfangsfläche innen | |
| 18. Außenwand | 46. Druckkammer | 71. Kennlinie v. Laminierplatte 12 |
| 21. Zulauf | 47. Temperatursensor | 72. Kennlinie PC 0,1 mm |
| 22. Ablauf | 48. Fluidkreislauf | 73. Kennlinie PC 0,4 mm |
| 23. Steg | 49. Niederdruckspeicher | 74. Laminierzeitpunkt |
| 25. Anschlusskontakt | 50. Kompressor | |
| 26. elektrische Leitung | 51. Zuführzweig | |
| 31. Laminiervorrichtung | 52. Zuführzweig | |
| 32. Oberwerkzeug | 54. Speicher | |
| 33. Unterwerkzeug | 55. Heizelement | |
| 34. Druckstempel | 57. Speicher | |
| 35. Schicht | 58. Kühlelement | |
| 36. Stapel | 60. Ventil | |
| 38. Laminatverbund | 61. Ventil | |

## Patentansprüche

1. Verfahren zum Laminieren von mehreren in einem Stapel (36) angeordneten Schichten (35) zu einem Laminatverbund (38), mit einer Laminiervorrichtung (31), welche zumindest ein Laminierwerkzeug (11) mit einem Oberwerkzeug (32) und einem Unterwerkzeug (33) mit jeweils einer Laminierplatte (12) aufweist, bei dem zwischen die obere und untere Laminierplatte (12) ein zu laminierender Stapel (36) positioniert wird, und bei dem die obere und/oder untere Laminierplatte (12) auf den Stapel (36) zu bewegt und der Stapel (36) durch die Laminierplatten (12) mit Druck beaufschlagt wird und ein Laminierprozess mit einer Aufheizphase zum Laminieren der Schichten (36) zum Laminatverbund (38) und einer Abkühlphase zum Kühlen des Laminatverbundes (38) angesteuert wird, **dadurch gekennzeichnet, dass** die obere und/oder untere Laminierplatte (12) in der Aufheizphase vor dem Zusammenführen der oberen und unteren Laminierplatte (12) mit einer gegenüber der Laminiertemperatur der Schichten (35) des Stapels (36) erhöhten Aufheiztemperatur angesteuert und aufgeheizt wird.

2. Verfahren nach Anspruch 1, **dadurch gekennzeichnet, dass** in der Aufheizphase nach dem Zusammenführen der Laminierplatten (12) die Aufheiztemperatur reduziert wird, so dass die Laminiertemperatur im Stapel (36) gleichbleibend gehalten wird.

3. Verfahren nach einem der vorhergehenden Ansprüche, **dadurch gekennzeichnet, dass** in der Aufheizphase nach dem Zusammenführen der Laminierplatten (12) eine exponentielle Reduzierung der Aufheiztemperatur der Laminierplatten (12) angesteuert wird.

4. Verfahren nach einem der vorhergehenden Ansprüche, **dadurch gekennzeichnet, dass** eine Reduzierung der Aufheiztemperatur am Ende der Aufheizphase des Laminierprozesses derart angesteuert wird, dass die Aufheiztemperatur gleich oder geringfügig oberhalb der höchsten Glasübergangstemperatur der im Stapel (36) sich befindlichen Schichten (35) liegt.

5. Verfahren nach einem der vorhergehenden Ansprüche, **dadurch gekennzeichnet, dass** während des Laminiervorganges in der Aufheizphase mit zumindest einem Temperatursensor (43) die Temperatur der Laminierplatten (12) erfasst und die Aufheiztemperatur für die Laminierplatten (12) geregelt wird.

6. Verfahren nach einem der vorhergehenden Ansprüche, **dadurch gekennzeichnet, dass** die Höhe der Aufheiztemperatur zur Ansteuerung der Laminierplatten auf das Material und/oder die Plattenstärke der Laminierplatten (12) angepasst wird.

7. Verfahren nach einem der vorhergehenden Ansprüche, **dadurch gekennzeichnet, dass** die zumindest eine Laminierplatte (12) mit einem Fluid aufgeheizt wird, welches eine Druckkammer (46) des Oberwerkzeugs (32) und/oder Unterwerkzeugs (33) durchströmt oder mittels Induktion oder mittels einem Widerstandsheizelement aufgeheizt wird.

## Claims

1. A method of laminating a plurality of layers (35) arranged in a stack (36) to create a laminated composite (38), said method employing a laminating device (31) which has at least one laminating tool (11) including an upper tool (32) and a lower tool (33) provided each with a lamination plate (12), and in which method a stack (36) to be laminated is positioned between the upper and lower lamination plates (12), and in which at least one of the upper and lower lamination plates (12) is moved towards the stack (36) and said stack (36) is exposed to pressure exerted by the lamination plates (12) and a lamination process is activated which includes a heating stage for causing the layers (36) to be laminated together so as to form the laminated composite (38) and a cooling stage for cooling said laminated composite (38), **characterised in that** during the heating stage and prior to bringing the upper and lower lamination plates (12) together, at least one of the upper and lower lamination plates (12) is activated and controlled to be heated with a heating temperature set to be slightly above the lamination temperature of the layers (35) of the stack (36).

2. The method as claimed in claim 1, **characterised in that** during the heating stage and subsequently to the bringing together of the lamination plates (12), the heating temperature is reduced, such that the lamination temperature within the stack (36) is maintained constant.

3. The method as claimed in any of the preceding claims, **characterised in that** during the heating stage and subsequently to the bringing together of the lamination plates (12), an exponential reduction of the heating temperature of the lamination plates (12) is activated.

4. The method as claimed in any of the preceding claims, **characterised in that** a reduction of the heating temperature at the end of the heating stage of the lamination process is activated and controlled in such a manner that the heating temperature is equal to, or slightly above, the highest glass transition temperature of the layers (35) present in the stack (36).

5. The method as claimed in any of the preceding claims, **characterised in that** during the heating stage of the laminating operation, the temperature of the lamination plates (12) is sensed by at least one temperature sensor (43) and **in that** the heating temperature for the lamination plates (12) is regulated accordingly.

6. The method as claimed in any of the preceding claims, **characterised in that** the heating temperature level used for activating and controlling the lamination plates is adapted to the material and/or to the plate thickness of said lamination plates (12).

7. The method as claimed in any of the preceding claims, **characterised in that** the at least one lamination plate (12) is heated by a fluid flowing through a pressure chamber (46) of at least one of the upper tool (32) and the lower tool (33) or by induction or by means of a resistance heating element.

## Revendications

1. Procédé destiné à stratifier plusieurs couches (35) disposées en une pile (36) en vue de former un composite stratifié (38) à l'aide d'un dispositif de stratification (31) qui présente au moins un outil de stratification (11) pourvu d'un outil supérieur (32) et d'un outil inférieur (33) ayant respectivement une plaque de stratification (12), lors duquel une pile (36) devant être stratifiée est disposée entre les plaques de stratification supérieure et inférieure (12) et lors duquel au moins l'une des plaques de stratification supérieure et inférieure (12) est déplacée vers la pile (36) et ladite pile (36) est mise sous pression par lesdites plaques de stratification (12) et un processus de stratification avec une phase de chauffe destinée à stratifier les couches (36) en vue de former le composite stratifié (38) et avec une phase de refroidissement destinée à refroidir ledit composite stratifié (38) est activé, **caractérisé en ce que**, dans l'étape de chauffe, au moins l'une des plaques de stratification supérieure et inférieure (12) est, avant la réunion des plaques de stratification supérieure et inférieure (12), activée et portée à une température de chauffe supérieure à la température de stratification des couches (35) de la pile (36).

2. Procédé selon la revendication 1, **caractérisé en ce que**, dans l'étape de chauffe, la température de chauffe est réduite après la réunion des plaques de stratification (12) de manière telle que la température de stratification dans la pile (36) est maintenue constante.

3. Procédé selon l'une quelconque des revendications précédentes, **caractérisé en ce que** dans l'étape de chauffe, une réduction exponentielle de la température de chauffe des plaques de stratification (12) est activée après la réunion des plaques de stratification (12).

4. Procédé selon l'une quelconque des revendications précédentes, **caractérisé en ce qu'**une réduction de la température de chauffe est activée à la fin de l'étape de chauffe du processus de stratification de manière telle que la température de chauffe est égale ou légèrement supérieure à la température de transition vitreuse la plus haute des couches (35) se trouvant dans la pile (36).

5. Procédé selon l'une quelconque des revendications précédentes, **caractérisé en ce que** dans l'étape de chauffe de l'opération de stratification, la température des plaques de stratification (12) est saisie et la température de chauffe pour les plaques de stratification (12) est réglée grâce à au moins un capteur de température (43).

6. Procédé selon l'une quelconque des revendications précédentes, **caractérisé en ce que** le niveau de température de chauffe requis pour activer les plaques de stratification est adaptée au matériau et/ou à l'épaisseur des plaques de stratification (12) .

7. Procédé selon l'une quelconque des revendications précédentes, **caractérisé en ce que** ladite au moins une plaque de stratification (12) est chauffée grâce à un fluide qui traverse une chambre de pression (46) de l'outil supérieur (32) et/ou de l'outil inférieur (33) ou par induction ou au moyen d'un élément chauffant à résistance.
